Europäisches Patentamt

European Patent Office

Office européen des brevets

(19)

(11) Publication number: **0 083 440**
**B1**

(12) **EUROPEAN PATENT SPECIFICATION**

(45) Date of publication of patent specification: **19.08.87**

(51) Int. Cl.⁴: **H 04 N 9/31**

(21) Application number: **82111910.4**

(22) Date of filing: **22.12.82**

(54) **Two-color liquid crystal light valve image projection system with prepolarization.**

(30) Priority: **28.12.81 US 334677**
**28.12.81 US 334679**

(43) Date of publication of application:
**13.07.83 Bulletin 83/28**

(45) Publication of the grant of the patent:
**19.08.87 Bulletin 87/34**

(84) Designated Contracting States:
**CH DE FR GB IT LI SE**

(56) References cited:
**US-A-4 127 322**
**US-A-4 191 456**

(73) Proprietor: **Hughes Aircraft Company**
**7200 Hughes Terrace P.O. Box 45066**
**Los Angeles California 90045-0066 (US)**

(72) Inventor: **Gagnon, Ralph J.**
**909 Sequoyah**
**Chico California 95926 (US)**
Inventor: **Cedarstrom, Roy A.**
**2507 Hartford**
**Fullerton California 92635 (US)**

(74) Representative: **Kuhnen, Wacker & Partner**
**Schneggstrasse 3-5 Postfach 1729**
**D-8050 Freising (DE)**

## Description

The invention relates to an image projection system comprising a high intensity lamp for providing light energy; a system of dichroic separators and prepolarizing beam splitters for splitting and prepolarizing the light emitted from said lamp into beams of different color and polarization states; reflecting light valves for selectively modulating the polarization state of each of said light beams; and means for combining the modulated light beams into a single output beam.

Such an image projection system is disclosed in US—A—4,191,456. This image projection system is a three-color system in which the light provided by a high intensity lamp first passes a prepolarizing prism so that a first light beam is produced which is still white, but has a predetermined polarization. This light beam is split by two dichroic separators into three beams which are of different color but still have the polarization of the first beam. Each of the three beams of different color is directed to a polarizing beam splitter which passes the light having the predetermined polarization to a reflecting light valve, which selectively modulates the polarization state in response to information applied thereto. The light having the modulated polarization state is reflected to the polarizing beam splitter which passes the portion of the light beam having a polarization different from the predetermined polarization to an arrangement of dichroic filters which combine the three beams of different color into a single output beam.

The quality of the projected image is generally a function of brightness, resolution and contrast. Image quality can generally be improved by placing a prepolarizing prism in the optical path in front of the main polarizing prism. The known system includes such a prepolarizing prism between the light source and the system of dichroic separators. Resolution and contrast does not only depend on the modulation performance of the light valves, but to a high degree also on the precision with which the beams of different color are recombined to the single output beam. This recombination makes necessary an exact point by point coverage of the different beams at the combining means and a perfect parallelism of the different components of the output beam. The necessary optical adjustments are the more difficult the more components the separated beams of different color have to pass.

It is the object of the invention to provide a system which may be easily adjusted in order to provide a projected image of enhanced resolution and contrast, the system being arranged for the handling of two components.

In a first embodiment of the invention, the system of dichroic separators and prepolarizing beam splitters consists of a first prepolarizing beam splitter for splitting and prepolarizing the light from said lamp into first and second beams having first and second polarization states, respectively; a first dichroic separator for extracting light of a first color from said first beam; a second dichroic separator for extracting light of a second color from said second beam; a dichroic adder for combining the first and second beams into a first single beam having substantially two components, the first component having essentially light of a first color and first polarization state and the second component having essentially light of a second color and a second polarization state; a second polarizing beam splitter for splitting the first single beam and reflecting light of the first color and polarization and transmitting light of the second color and polarization; a first valve for selectively modulating the polarization state of the light reflected by said polarizing beam splitter from the first polarization state to the second polarization state; and a second light valve for selectively modulating the polarization state of the light transmitted by said polarizing beam splitter from the second polarization state to the first polarization state; the second polarizing beam splitter being concurrently the means for combining the modulated beams into the single output beam.

A second embodiment of the invention differs from the third embodiment in the portion of the system comprising dichroic separators and prepolarizing beam splitters and being situated between the lamp and the polarizing beam splitter which receives the first single beam. In this second embodiment of the invention, this portion of said system consists of a first dichroic separator for separating light from the lamp into first and second color components; first means for prepolarizing the first color component into a first polarization state; second means for prepolarizing the second color component into a second polarization state; and third means for combining the polarized outputs of the first and second means into a first single beam having two components, the first component having essentially light of a first color and polarization state and the second component having essentially light of a second color and polarization state.

Instead of producing two beams of different colors having the same predetermined polarization state as taught by the prior art, the invention provides for splitting the light into two beams having different color and different polarization states and combining these beams to a first single beam before the polarization of the components of this single beam is modulated. Thus, in the optical path for separating the two components only a few optical elements are needed which can easily be adjusted in order to bring said two components to perfect coverage. Thereafter, the components of the first single beam are split again in order to become modulated, however, the elements used for separating and recombining the two components are the same, so that here again a high accuracy may be reached in a simple way. Thus, the invention provides for a simple system producing a projected image of high quality.

In both embodiments, the prepolarizing beam splitters and/or the means for prepolarizing may be formed by bi-prism type polarizing beam splitters.

The various features and advantages of the present invention may be more readily understood with reference to the following detailed description taken in conjunction with the accompanying drawings, in which

Figure 1 is a diagrammatic representation of the preferred embodiment of the present invention and

Figure 2 is a diagrammatic representation of an alternative embodiment of the present invention.

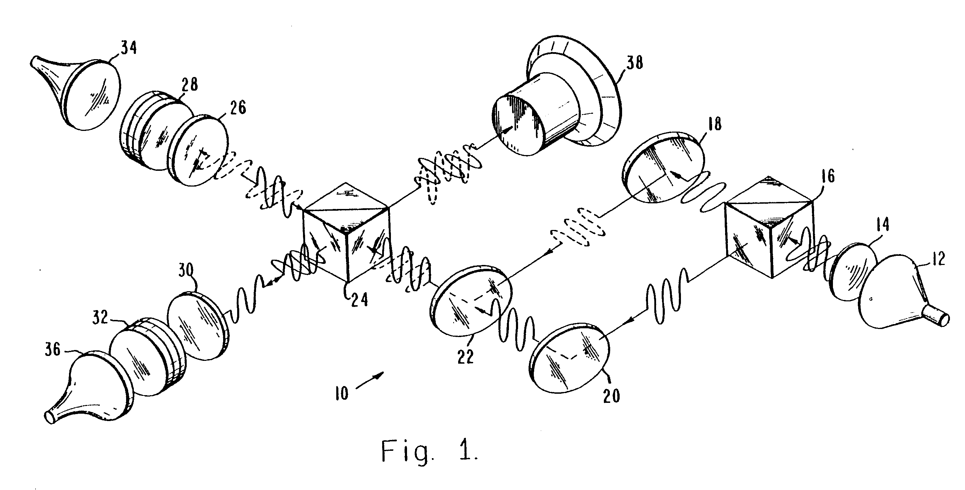

The preferred embodiment of the two-color liquid crystal light valve image projection system of the present invention is shown in full perspective in Figure 1. The system 10 includes a xenon arc lamp 12 as a light source. A collimating lens 14 is mounted in coaxial alignment with the lamp 12. The xenon arc lamp 12 and the collimating lens 14 cooperate to provide a high intensity beam of unpolarized collimated light energy containing the entire visible spectrum or white light. Other sources of light energy can be utilized here without departing from the scope of the present invention.

A prepolarizing beam splitter 16 is aligned with the lamp 12 and the collimating lens 14. The prepolarizing beam splitter 16 is preferably a polarization selective light dividing interference coating or a multi-refractive layer device of the type described in U.S. Patent No. 2,403,731 to Mac-Neille. As disclosed in this patent, a plurality of refractive layers of thin film coating of appropriate index of refraction and thickness are deposited at the interface between two halves of a glass cube so that the layer forms a 45° angle with the intersecting sides of the cube. The thin film coating is effective to transmit light of substantially a first polarization, here P, and reflect light of substantially a second polarization, here S. Accordingly, prepolarizing beam splitter 16 substantially passes the P component in one direction while reflecting the S component in another. This results in two substantially polarized beams. The P polarized beam is represented in the Figure as a horizontally oriented wave. The S polarized beam is represented as a vertically oriented wave.

In the preferred embodiment of Figure 1, the P polarized beam is transmitted to a first dichroic separator 18. The S polarized beam is transmitted to a second dichroic separator 20. The dichroic separators 18 and 20 and dichroic adder 22 do not effect the polarization states of the light beams. The separators 18 and 20 have wavelength selective coatings which are effective to reflect light of one color while transmitting light of another. The separators 18 and 20 and the adder 22 are produced by a number of vendors including Optical Coating Laboratories Incorporated.

The first dichroic separator 18 receives P polarized white light and reflects P polarized green light. In effect, it extracts the green light from the incident white light. The green P polarized output beam is shown in Figure 1 as a dashed horizontal wave. A second dichroic separator 20 receives the reflection of the S polarized beam from the prepolarizer 16. The dichroic separator 20 extracts red light from incident white light and reflects it to dichroic adder 22. The dichroic adder 22 combines the beams from the separators 18 and 20 to provide an output beam which consist of green light which is P polarized and red light which is S polarized.

The combined beam illuminates the main prism 24 which is also a polarizing beam splitter of the above described MacNeille bi-prism variety. In the preferred embodiment, the main prism 24 is of an optimal design which is identical to that of the prepolarizing beam splitter 16. The main prism transmits the green P polarized light through a trim filter 26 to a first light valve 28. The main prism 24 also reflects the red S polarized light through a trim filter 30 to a second light valve 32. Since the main prism is also a polarizer it operates on the incident P polarized light to substantially remove any residue of S polarized light which was not removed by the prepolarizing prism 16. The same is true for the S polarized light incident on the main prism 24. The net result is a significant improvement in contrast without the sacrifice of the second color channel through the use of a single prepolarizing beam splitter.

The trim filters 26 and 30 are designed to prevent light of the wrong color from reaching the light valve. As described in U.S. Patent No. 4,019,807, the light valves 28 and 32 modulate polarization of incident light in accordance with the presence of writing light from a modulating source such as cathode ray tubes 34, and 36, respectively.

The light altered by light valves 28 and 32 is returned to the main prism 24 where modulations of a polarization are converted to modulations of brightness. The main prism 24 combines the modulated light from the light valves 28 and 32 and transmits it to the projection lens 38 for projection on a screen or surface (not shown) in the conventional manner. It should be noted that the beam splitters were designed and evaluated with the aid of the thin film computer program provided as a service by the Genesee Company of Rochester, N.Y.

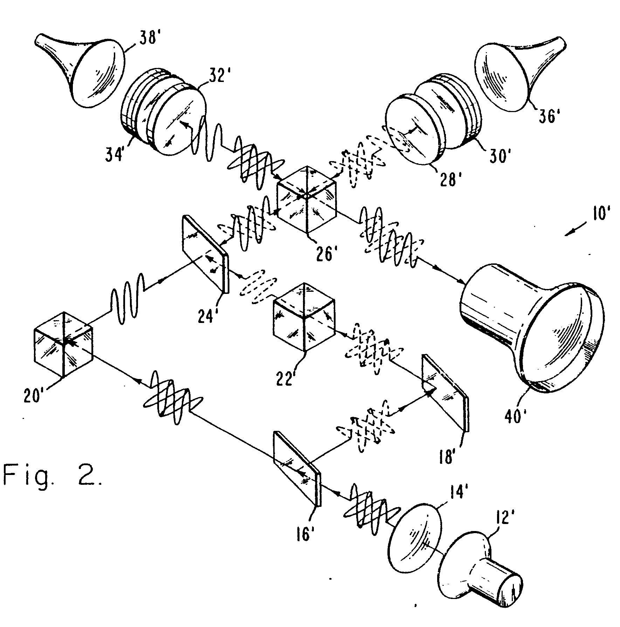

The alternative embodiment of the two-color liquid crystal light valve image projection system of the present invention is shown in full perspective in Figure 2. The system 10' includes a xenon arc lamp 12' as a source of light. A collimating lens 14' is mounted in coaxial alignment with lamp 12'. The xenon arc lamp 12' and the collimating lens 14' cooperate to provide a high intensity beam of unpolarized collimated white light. As mentioned above, other sources of light energy may be utilized here without departing from the scope of the present invention.

A dichroic separator 16' is disposed in the optical path of the lamp 12' in axial alignment at an approximately 45° angle with respect thereto.

The separator 16' has a wavelength selective coating which, in the preferred embodiment, is effective to reflect green light and transmit red light. The green light is represented in the Figure as a dashed wave. The red light is shown as a solid wave. The separator 16' is produced by a number of vendors including Optical Coating Laboratories, Inc.

The green light is transmitted to a relay mirror 18' which may be an ordinary plane silvered mirror. The mirror 18' is mounted parallel to the separator 16' so that the green light is redirected along an optical path parallel to that incident upon separator 16'.

The collimated unpolarized red light transmitted by separator 16' is applied to a first prepolarizing beam splitter 20'. The collimating unpolarized green light from the relay mirror 18' is applied to a second prepolarizing beam splitter 22'. The beam splitters 20' and 22' are preferably polarization selective, light dividing interference coatings or a multi-refractive layer devices of the type described in the above-identified U.S. Patent No. 2,403,731 to MacNeille.

The prepolarizing beam splitter 20' substantially passes the red P component out of the system, and substantially reflects the red S component (shown as a solid vertically oriented wave) to the dichroic adder 24'. Similarly, the prepolarizing beam splitter 22' substantially reflects the S polarized component of the incident green light out of the system and substantially passes the P polarized component (shown as a dashed horizontally oriented wave) to the dichroic adder 24'. Note that the unwanted components may be removed by an optical dump, for example, which is not shown in the drawing.

The dichroic adder 24' is of a design and construction similar if not identical to that of the dichroic separator 16'. The dichroic adder 24' is parallel to the dichroic separator 16' so that the red light reflected from the prepolarizing beam splitter 20' is combined with the green light passed by the prepolarizing beam splitter 22' into a single beam which illuminates a third polarizing beam splitter 26' hereinafter referred to as the main prism.

The main prism 26' is also preferably a polarization selective, light dividing interference coating or multi-refractive layer device of the type described above in U.S. Patent No. 2,403,731 to MacNeille. The main prism 26' should be of an optimal design identical to that of the prepolarizing beam splitter 20' or 22'. The main prism 26' substantially transmits the green P polarized light through a trim filter 28' to a first light valve 30'. The main prism 26' also substantially reflects the red S polarized light through a trim filter 32' to a second light valve 34'. Since the main prism is also a polarizer, it operates on the incident P polarized light to substantially remove any residue of S polarized light which was not removed by the prepolarizing prism 22'. The same is true for the S polarized light incident on the main prism 24'. It operates on incident S polarized light to substantially remove any P residue which was not removed by the prepolarizing prism 20'. The use of the prepolarizing beam splitters 20' and 22' thus provide a significant improvement in contrast without the sacrifice of the second color channel.

As described in U.S. Patent No. 4,019,807, the light valves 30' and 34' modulate the polarization of incident light in accordance with the presence of writing light from a modulating source such as the cathode ray tubes 36' and 38', respectively.

The light altered by valves 30' and 34' is returned to the main prism 26' where the modulations of polarization are converted to modulations of brightness. The main prism 26' combines the modulated light from the light valves 30' and 34' and transmits it to the projection lens 40' for projection on a screen or surface not shown.

It should be noted that the beam splitters were designed and evaluated with the aid of the thin film computer program provided as a service by the Genesee Company of Rochester, N.Y.

The present invention has been described with reference to a particular embodiment and the context of a particular application. It is understood that those having ordinary skill in the art will be able to modify the present invention within the scope of the teachings thereof.

**Claims**

1. An image projection system comprising:
a high intensity lamp (12) for providing light energy;
a system of dichroic separators (18, 20) and prepolarizing beam splitters (16, 24) for splitting and prepolarizing the light emitted from said lamp (12) into beams of different color and polarization states;
reflecting light valves (28, 32) for selectively modulating the polarization state of each of said light beams; and
means (24) for combining the modulated light beams into a single output beam,
characterized in that for the projection of a two color image the system of dichroitic separators and prepolarizing beam splitters consists of
a first prepolarizing beam splitter (16) for splitting and prepolarizing the light from said lamp (12) into first and second beams having first and second polarization states, respectively;
a first dichroic separator (18) for extracting light of a first color from said first beam;
a second dichroic separator (20) for extracting light of a second color from said second beam;
a dichroic adder (22) for combining the first and second beams into a first single beam having substantially two components, the first component having essentially light of a first color and first polarization state and the second component having essentially light of a second color and a second polarization state;
a second polarizing beam splitter (24) for splitting the first single beam and reflecting light of the first color and polarization and transmitting light of the second color and polarization;

a first light valve (32) for selectively modulating the polarization state of the light reflected by said polarizing beam splitter (24) from the first polarization state to the second polarization state; and

a second light valve (28) for selectively modulating the polarization state of the light transmitted by said polarizing beam splitter (24) from the second polarization state to the first polarization state;

the second polarizing beam splitter (24) being concurrently the means for combining the modulated beams into the single output beam.

2. An image projection system comprising:

a high intensity lamp (12') for providing light energy;

a system of dichroic separators (16') and prepolarizing beam splitters (20', 22', 26') for splitting and prepolarizing the light emitted from said lamp (12') into beams of different color and polarization states;

reflecting light valves (30', 34') for selectively modulating the polarization state of each of said light beams; and

means (26') for combining the modulated light beams into a single output beam,

characterized in that for the projection of a two color image the system of dichroic separators and prepolarizing beam splitters consists of

a first dichroic separator (16') for separating light from the lamp (12') into first and second color components;

first means (20') for prepolarizing the first color component into a first polarization state;

second means (22') for prepolarizing the second color component into a second polarization state;

third means (24') for combining the polarized outputs of the first and second means into a first single beam having two components, the first component having essentially light of a first color and polarization state and the second component having essentially light of a second color and polarization state;

a polarizing beam splitter (26') for splitting the first single beam and reflecting light of the first color and polarization state and transmitting light of the second color and polarization state;

a first light valve (34') for selectively modulating the polarization state of the light reflected by said polarizing beam splitter (26') from the first polarization state to the second polarization state; and

a second light valve (30') for selectively modulating the polarization state of the light transmitted by said polarizing beam splitter (26') from the second polarization state to the first polarization state;

the polarizing beam splitter (26') being concurrently the means for combining the modulated beams into the single output beam.

3. The image projection system of claim 1 or 2, further characterized by said prepolarizing beam splitter (16, 24, 26') and/or said means (20', 22') for prepolarizing being a bi-prism type polarizing beam splitter.

**Patentansprüche**

1. Bildprojektionssystem mit:

einer Hochintensitäts-Lampe (12) zum Liefern von Lichtenergie;

einem System von zwei Farbentrennern (18, 20) und vorpolarisierenden Bündelaufspaltern (16, 24) zum Spalten und Vorpolarisieren des von der Lampe (12) ausgesendeten Lichtes in Bündel von unterschiedlicher Farbe und Polarisierungszuständen;

lichtreflektierenden Röhren (28, 32) zur selektiven Modulation des Polarisationszustandes von jedem der Lichtbündel; und

Einrichtungen (24) zum Zusammenfassen der modulierten Lichtbündel in ein einzelnes Ausgangsbündel,

dadurch gekennzeichnet, daß für die Projektion eines zweifarbigen Bildes das System der Zweifarbentrenner und vorpolarisierenden Bündelaufspaltern aufweist:

einen ersten vorpolarisierenden Bündelaufspalter (16) zum Spalten und Vorpolarisieren des Lichtes von der Lampe (12) in ein erstes und zweites Bündel, die jeweils einen ersten bzw. zweiten Polarisationszustand haben;

einen ersten Zweifarbentrenner (18) zum Extrahieren von Licht einer ersten Farbe von dem ersten Bündel;

einen zweiten Zweifarbentrenner (20) zum Extrahieren von Licht einer zweiten Farbe von dem zweiten Bündel;

einen Zweifarbenaddierer (22) zum Zusammenfassen des ersten und zweiten Bündels in ein einzelnes Bündel, welches im wesentlichen zwei Komponenten hat, wobei die erste Komponente im wesentlichen Licht der ersten Farbe und des ersten Polarisationszustandes und die zweite Komponente im wesentlichen Licht der zweiten Farbe und eines zweiten Polarisationszustandes hat;

einen zweiten polarisierenden Bündelaufspalter (24) zum Spalten des ersten einzelnen Bündels und Reflektieren des Lichts der ersten Farbe und Polarisation und Übertragung des Lichts der zweiten Farbe und Polarisation;

eine erste Lichtröhre (32) zur selektiven Modulation des Polarisationszustandes des Lichtes, welches mit dem polarisierenden Bündelaufspalter (24) reflektiert wurde, aus dem ersten Polarisationszustand in den zweiten Polarisationszustand; und

eine zweite Lichtröhre (28) zum selektiven Modulieren des Polarisationszustandes des Lichtes, welches mit dem polarisierenden Bündelaufspalter (24) übertragen wurde, aus dem zweiten Polarisationszustand in den ersten Polarisationszustand;

wobei der zweite polarisierende Bündelaufspalter (24) gleichzeitig die Einrichtung zum Zusammenfassen der modulierten Bündel in ein einzelnes Ausgangsbündel ist.

2. Bildprojektionssystem mit:

einer Hochintensitäts-Lampe (12') zum Liefern von Lichtenergie;

einem System von Zweifarbentrennern (16') und vorpolarisierenden Bündelaufspaltern (20', 22', 26') zum Spalten und Vorpolarisieren des von der Lampe (12') ausgesendeten Lichtes in Bündel von unterschiedlicher Farbe und Polarisierungszuständen;

lichtreflektierenden Röhren (30', 34') zur selektiven Modulation des Polarisationszustandes von jedem der Lichtbündel; und

Einrichtungen (26') zum Zusammenfassen der modulierten Lichtbündel in ein einzelnes Ausgangsbündel,

gekennzeichnet dadurch, daß für die Projektion eines zweifarbigen Bildes das System der Zweifarbentrenner und vorpolarisierenden Bündelaufteilers aufweist:

einen ersten Zweifarbentrenner (16') zum Trennen des Lichts von der Lampe (12') in eine erste und zweite Farbkomponente;

erste Einrichtungen (20') zum Vorpolarisieren der ersten Farbkomponente in einen ersten Polarisationszustand;

zweite Einrichtungen (22') zum Vorpolarisieren der zweiten Farbkomponente in einem zweiten Polarisationszustand;

dritte Einrichtungen (24') zum Zusammenfassen der polarisierten Ausgänge der ersten und zweiten Einrichtung in ein erstes einzelnes Bündel mit zwei Komponenten, wobei die erste Komponente im wesentlichen Licht einer ersten Farbe und eines ersten Polarisationszustandes und die zweite Komponente im wesentlichen Licht einer zweiten Farbe und eines zweiten Polarisationszustandes hat;

ein polarisierender Bündelaufspalter (26') zum Spalten des ersten einzelnen Bündels und Reflektieren von Licht einer ersten Farbe und eines ersten Polarisationszustandes und Übertragen von Licht einer zweiten Farbe und eines zweiten Polarisationszustandes;

eine erste Lichtröhre (34') zur selektiven Modulation des Polarisationszustandes des Lichtes, das von dem polarisierenden Bündelaufspalter (26') reflektiert wurde, aus dem ersten Polarisationszustand in den zweiten Polarisationszustand; und

eine zweite Lichtröhre (30') zur selektiven Modulation des Polarisationszustandes des Lichtes, welches von dem polarisierenden Bündelaufspalter (26') übertragen wurde, aus dem zweiten Polarisationszustand in den ersten Polarisationszustand;

wobei der polarisierende Bündelaufspalter (26') gleichzeitig die Einrichtung zum Zusammenfassen der modulierten Bündel in ein einzelnes Ausgangsbündel ist.

3. Bildprojektionssystem nach Anspruch 1 oder 2, weiter dadurch gekennzeichnet, daß der vorpolarisierende Bündelaufspalter (16, 24, 26') und/oder die Einrichtungen (20', 22') zum Vorpolarisieren ein Zwei-Prismen-Typ polarisierender Bündelaufspalter sind/ist.

**Revendications**

1. Système de projection d'images comprenant:

une lampe (12) à haute intensité destinée à fournir de l'énergie lumineuse;

un système de séparateurs dichroïques (18, 20) et de diviseurs optiques (16, 24) de prépolarisation destinés à diviser et prépolariser la lumière émise par ladite lampe (12) en faisceaux ayant des couleurs et des états de polarisation différents;

des modulateurs de lumière réfléchissants (28, 32) destinés à moduler sélectivement l'état de polarisation de chacun desdits faisceaux lumineux; et

des moyens (24) destinés à combiner les faisceaux lumineux modulés en un faisceau unique de sortie,

caractérisé en ce que, pour la projection d'une image en deux couleurs, le système de séparateurs dichroïques et de diviseurs optiques de prépolarisation comprend

un premier diviseur optique (16) de prépolarisation destiné à diviser et prépolariser la lumière provenant de ladite lampe (12) en premier et second faisceaux ayant des premier et second états de polarisation, respectivement;

un premier séparateur dichroïque (18) destiné à extraire de la lumière d'une première couleur dudit premier faisceau;

un second séparateur dichroïque (20) destiné à extraire de la lumière d'une seconde couleur dudit second faisceau;

un additionneur dichroïque (22) destiné à combiner les premier et second faisceaux en un premier faisceau unique ayant sensiblement deux composantes, la première composante ayant essentiellement de la lumière d'une première couleur et d'un premier état de polarisation et la seconde composante ayant essentiellement de la lumière d'une seconde couleur et d'un second état de polarisation;

un second diviseur optique (24) de polarisation destiné à diviser le premier faisceau unique, à réfléchir la lumière des premières couleur et polarisation et à transmettre la lumière des secondes couleur et polarisation;

un premier modulateur de lumière (32) destiné à moduler sélectivement l'état de polarisation de la lumière réfléchie par ledit diviseur optique (24) de polarisation, du premier état de polarisation au second état de polarisation; et

un second modulateur de lumière (28) destiné à moduler sélectivement l'état de polarisation de la lumière transmise par ledit diviseur optique (24) de polarisation, du second état de polarisation au premier état de polarisation;

le second diviseur optique (24) de polarisation constituant en même temps les moyens destinés à combiner les faisceaux modulés pour former le faisceau unique de sortie.

2. Système de projection d'images comprenant:

une lampe (12') à haute intensité destinée à fournir de l'énergie lumineuse;

un système de séparateurs dichroïques (16') et de diviseurs optiques (20', 22', 26') de prépolarisa-

6

tion destinés à diviser et prépolariser la lumière émise par ladite lampe (12') en faisceaux de couleur et d'état de polarisation différents;

des modulateurs de lumière réfléchissants (30', 34') destinés à moduler sélectivement l'état de polarisation de chacun desdits faisceaux lumineux; et

des moyens (26') destinés à combiner les faisceaux lumineux modulés en un faisceau unique de sortie,

caractérisé en ce que, pour la projection d'une image en deux couleurs, le système de séparateurs dichroïques et de diviseurs optiques de prépolarisation comprend

un premier séparateur dichroïque (16') destiné à séparer la lumière provenant de la lampe (12') en première et seconde composantes de couleur;

des premiers moyens (20') destinés à prépolariser la première composante de couleur en un premier état de polarisation;

des deuxièmes moyens (22') destinés à prépolariser la seconde composante de couleur en un second état de polarisation;

des troisièmes moyens (24') destinés à combiner les sorties polarisées des premiers et deuxièmes moyens en un premier faisceau unique possédant deux composantes, la première composante ayant essentiellement de la lumière d'une première couleur et d'un premier état de polarisation et la seconde composante ayant essentiellement de la lumière d'une seconde couleur et d'un second état de polarisation;

un diviseur optique (26') de polarisation destiné à diviser le premier faisceau unique et à réfléchir la lumière de la première couleur et du premier état de polarisation, et à transmettre la lumière de la seconde couleur et du second étant de polarisation;

un premier modulateur de lumière (34') destiné à moduler sélectivement l'état de polarisation de la lumière réfléchie par ledit diviseur optique (26') de polarisation, du premier état de polarisation au second état de polarisation; et

un second modulateur de lumière (30') destiné à moduler sélectivement l'état de polarisation de la lumière transmise par ledit diviseur optique (26') de polarisation, du second état de polarisation au premier état de polarisation;

le diviseur optique (26') de polarisation constituant en même temps les moyens destinés à combiner les faisceaux modulés en faisceau unique de sortie.

3. Système de projection d'images selon la revendication 1 ou 2, caractérisé en outre en ce que ledit diviseur optique de prépolarisation (16, 24, 26') et/ou lesdits moyens (20', 22') de prépolarisation sont un diviseur optique de polarisation du type biprisme.

Fig. 1.

0 083 440

Fig. 2.